# EUROPÄISCHE PATENTSCHRIFT

(11) **EP 4 709 627 B1**
(45) Veröffentlichungstag und Bekanntmachung des Hinweises auf die Patenterteilung: **02.12.2026**
(21) Anmeldenummer: 24720484.5
(22) Anmeldetag: 18.04.2024
(51) Int. Cl.: B60W 60/00

(54) **VERFAHREN ZUM BETRIEB EINES AUTOMATISIERT FAHRENDEN FAHRZEUGES**
METHOD FOR OPERATING A SELF-DRIVING VEHICLE
PROCÉDÉ DE FONCTIONNEMENT D'UN VÉHICULE AUTONOME

(30) Priorität: 11.05.2023 DE 102023001905
(43) Veröffentlichungstag der Anmeldung: 18.03.2026
(73) Patentinhaber: Mercedes-Benz Group AG, 70372 Stuttgart (DE)
(72) Erfinder: KOBETZ, Christian, 72160 Horb (DE); FICHTNER, Konstantin, 71063 Sindelfingen (DE)
(74) Vertreter: Novagraaf Group
(86) Internationale Anmeldenummer: PCT/EP2024/060495
(87) Internationale Veröffentlichungsnummer: WO 2024/231066

(56) Entgegenhaltungen:
- DE-A1- 102006 059 915
- DE-A1- 102018 221 144
- DE-A1- 19 933 782
- US-A1- 2019 263 401

## Beschreibung

Die Erfindung betrifft ein Verfahren zum Betrieb eines automatisiert fahrenden Fahrzeuges, wobei anhand erfasster Signale einer Umgebungssensorik eine Umgebung des Fahrzeuges und sich in dieser befindende Objekte detektiert werden.

Aus der DE 10 2013 003 215 A1 ist ein Verfahren zur Regelung der Fahrzeuggeschwindigkeit eines Kraftfahrzeuges durch ein Fahrassistenzsystem zur Geschwindigkeitsregelung bekannt, wobei das Fahrerassistenzsystem mit einer Erfassungsvorrichtung für geschwindigkeitsrelevante Verkehrszeichen gekoppelt ist. Dabei wird die Fahrzeuggeschwindigkeit durch das Fahrassistenzsystem auf eine Geschwindigkeit geregelt, deren Wert durch einen Benutzer mittels einer Eingabevorrichtung gesetzt wird, und dieser Setzwert durch das Fahrassistenzsystem gespeichert. Bei Erfassen eines geschwindigkeitsrelevanten Verkehrszeichens, das eine zulässige Höchstgeschwindigkeit vorgibt, wird ein durch das geschwindigkeitsrelevante Verkehrszeichen vorgegebener Höchstwert der zulässigen Höchstgeschwindigkeit durch die Erfassungsvorrichtung bestimmt und dieser an das Fahrassistenzsystem übermittelt. Das Fahrassistenzsystem vergleicht den Setzwert mit dem Höchstwert und regelt die Fahrzeuggeschwindigkeit auf die zulässige Höchstgeschwindigkeit, falls der Setzwert größer als der Höchstwert ist. Dabei wird der durch den Fahrer bestimmte und im Fahrassistenzsystem gespeicherte Setzwert aufrechterhalten, so dass die Fahrzeuggeschwindigkeit durch das Fahrassistenzsystem erneut auf die durch den Setzwert vorgegebene Setzgeschwindigkeit geregelt wird, wenn ein geschwindigkeitsrelevantes Verkehrszeichen erfasst wird, das die zulässige Höchstgeschwindigkeit aufhebt.

Aus der DE 10 2014 215 274 A1 ist ein Verfahren zum Betreiben eines Fahrzeugs unter Berücksichtigung eines nachfolgenden Fahrzeugs bekannt, bei dem vorgesehen ist, dass ein Abstand und eine Relativgeschwindigkeit zu dem nachfolgenden Fahrzeug ermittelt werden, dass basierend auf dem ermittelten Abstand und der ermittelten Relativgeschwindigkeit sowie basierend auf einem vorgegebenen Straßenreibwert und einer Fahrgeschwindigkeit des Fahrzeugs ein Bremsweg ermittelt wird, den das nachfolgende Fahrzeug mindestens benötigt, um eine Kollision mit dem Fahrzeug zu vermeiden, dass der ermittelte Bremsweg mit dem ermittelten Abstand verglichen wird und dass das Fahrzeug in Abhängigkeit des Ergebnisses dieses Vergleichs derart geführt wird, dass der dem nachfolgenden Fahrzeug zur Verfügung stehende Bremsweg vergrößert wird.

Aus der DE 199 33 782 A1 ist ein Verfahren zur Vermeidung von Auffahrunfällen für ein Fahrzeug bekannt, bei dem vorgesehen ist, dass ein Abstand und eine Relativgeschwindigkeit zu einem nachfolgenden Fahrzeug ermittelt werden, dass basierend auf dem ermittelten Abstand, der ermittelten Relativgeschwindigkeit und einer Fahrgeschwindigkeit des Fahrzeugs eine Zeit berechnet wird, die verbleibt, bis das nachfolgende Fahrzeug mit dem Fahrzeug kollidieren wird und dass in Abhängigkeit der berechneten Zeit eine optische oder akustische Warnung ausgelöst wird.

Aus der DE 10 2019 107 653 A1 ist ein Verfahren zum Bestimmen einer Kollisionsgefahr zwischen zwei Fahrzeugen bekannt, wobei die Bestimmung der Kollisionsgefahr auf einem Vergleichen eines Abstands zwischen den Fahrzeugen mit einem Schwellwert beruht.

Aus der DE 10 2019 107 412 B3 ist ein Verfahren zur Abstandsregelung für ein Fahrzeug bekannt, bei dem ein Abstand zu einem vorausfahrenden Fahrzeug ermittelt wird, eine Kritikalität des ermittelten Abstands bestimmt wird und die bestimmte Kritikalität des ermittelten Abstands bei der Abstandsregelung berücksichtigt wird.

Aus der US 2019/0263401 A1 ist ein Verfahren zum Planen eines Fahrwegs für ein Fahrzeug bekannt, bei dem mindestens ein externes Fahrzeug in einem vorbestimmten Abstand zum ersten Fahrzeug erfasst wird. Dabei wird ein Risiko des externen Fahrzeugs basierend auf einem Typ des externen Fahrzeugs bestimmt. Basierend auf diesem Risiko wird dann der Fahrweg des ersten Fahrzeugs geplant. Dabei wird bei einem hohen Risiko, beispielsweise durch ein nachfolgendes Fahrzeug, die Geschwindigkeit des ersten Fahrzeugs erhöht oder ein Spurwechsel eingeleitet, um den Abstand zu diesem Fahrzeug zu vergrößern.

Der Erfindung liegt die Aufgabe zugrunde, ein verbessertes Verfahren zum Betrieb eines automatisiert fahrenden Fahrzeuges anzugeben.

Die Aufgabe wird erfindungsgemäß gelöst durch ein Verfahren, welches die in Anspruch 1 angegebenen Merkmale aufweist.

Vorteilhafte Ausgestaltungen der Erfindung sind Gegenstand der Unteransprüche.

Ein Verfahren zum Betrieb eines automatisiert fahrenden Fahrzeuges, wobei anhand erfasster Signale einer Umgebungssensorik eine Umgebung des Fahrzeuges und sich in dieser befindende Objekte detektiert werden, sieht vor, dass eine Kritikalität einer anhand der Signale erfassten, dem Fahrzeug rückwärtig vorliegende Situation in Abhängigkeit einer ermittelten Fahrzeugklasse eines dem Fahrzeug nachfolgenden Fahrzeuges und eines erfassten Abstandes zwischen dem Fahrzeug und dem nachfolgenden Fahrzeug klassifiziert wird.

Durch Anwendung des Verfahrens ist es möglich, entsprechend der klassifizierten Kritikalität verschiedene Maßnahmen durch das Fahrzeug einzuleiten, um insbesondere einen drohenden Auffahrunfall zwischen dem Fahrzeug und dem nachfolgenden Fahrzeug, basierend auf einer Fehlprojektion des Fahrzeuges in Bezug auf ein vorausfahrendes Fahrzeug und einer dadurch falsch eingeleiteten Bremsung des automatisiert fahrenden Fahrzeuges, weitestgehend zu vermeiden.

Erfindungsgemäß wird eine für den automatisierten Fahrbetrieb zulässige Höchstgeschwindigkeit des Fahrzeuges in Abhängigkeit der klassifizierten Kritikalität bestimmt. Dabei stellt die in Abhängigkeit der Kritikalität bestimmte zulässige Höchstgeschwindigkeit ein mehrstufiges Sicherheitskonzept für das Fahrzeug und auch für das nachfolgende Fahrzeug dar, da somit das Risiko eines Auffahrunfalles zwischen dem nachfolgenden Fahrzeug und dem Fahrzeug, insbesondere aufgrund einer fehleingeleiteten Bremsung des Fahrzeuges, verringert werden kann.

Erfindungsgemäß wird weiter zwischen einer geringsten Kritikalität, einer mittleren Kritikalität und einer höchsten Kritikalität unterschieden, wodurch das mehrstufige Sicherheitskonzept realisiert wird. Das heißt, dass je klassifizierter Kritikalität der vorliegenden rückwärtigen Situation des Fahrzeuges eine andere Höchstgeschwindigkeit zulässig ist.

Dabei erfolgt die Bestimmung der zulässigen Höchstgeschwindigkeit derart, dass die zulässige Höchstgeschwindigkeit bei klassifizierter geringster Kritikalität einem vorgegebenen Maximalwert entspricht und mit klassifizierter zunehmender Kritikalität verringert wird. Die zulässige Höchstgeschwindigkeit für den automatisierten Fahrbetrieb des Fahrzeuges wird also in Abhängigkeit der Kritikalität stufenweise verringert, so dass die zulässige Höchstgeschwindigkeit für den automatisierten Fahrbetrieb des Fahrzeuges bei ermittelter höchster Kritikalität beispielsweise maximal 20 km/h beträgt, so dass das nachfolgende Fahrzeug seine momentane Fahrgeschwindigkeit verringern muss und bei einem dennoch eintretenden Auffahrunfall eine Kollisionsschwere der beiden Fahrzeuge somit begrenzt werden kann.

In einer Weiterbildung des Verfahrens wird in Bezug auf die Fahrzeugklasse des nachfolgenden Fahrzeuges zwischen Personenkraftwagen, Motorrad und Lastkraftwagen unterschieden. Zwischen diesen Fahrzeugklassen wird unterschieden, da ein Personenkraftwagen, wenn dieser als nachfolgendes Fahrzeug hinter dem Fahrzeug fährt, mit hoher Wahrscheinlichkeit maßgeblich auf das vor ihm fahrende Fahrzeug achtet und somit bei einer Bremsung des Fahrzeuges vergleichsweise frühzeitig selbst eine Bremsung einleitet, um einen Auffahrunfall zu vermeiden.

Ein Fahrer eines Motorrades oder eines Lastkraftwagens sitzt im Vergleich höher als ein Fahrer eines Personenkraftwagens, so dass der Fahrer eines Motorrades oder eines Lastkraftwagens über das Fahrzeug hinwegsehen kann und aufgrund einer somit für diesen Fahrer einsichtigen Situation eine Bremsung des Fahrzeuges eher nicht erwartet, welches wiederum aufgrund einer Falschinterpretation in Bezug auf ein erfasstes Objekt eine Bremsung einleitet.

In einer Ausführung liegt die geringste Kritikalität in Bezug auf die erfasste rückwärtige Situation des Fahrzeuges vor,
- wenn ermittelt wird, dass es sich bei dem nachfolgenden Fahrzeug um einen Personenkraftwagen handelt und der Abstand zwischen dem Fahrzeug und dem als Personenkraftwagen erfassten nachfolgenden Fahrzeug mehr als 30 Meter beträgt,
- wenn ermittelt wird, dass es sich bei dem nachfolgenden Fahrzeug um ein Motorrad handelt und der Abstand zwischen dem Fahrzeug und dem als Motorrad erfassten nachfolgenden Fahrzeug mehr als 50 Meter beträgt und
- wenn ermittelt wird, dass es sich bei dem nachfolgenden Fahrzeug um einen Lastkraftwagen handelt und der Abstand zwischen dem Fahrzeug und dem als Lastkraftwagen erfassten nachfolgenden Fahrzeug mehr als 50 Meter beträgt.

Dass der Abstand zwischen dem Fahrzeug und dem Personenkraftwagen als erfasstes nachfolgendes Fahrzeug geringer gewählt ist, als wenn es sich bei dem nachfolgenden Fahrzeug um ein Motorrad oder einen Lastkraftwagen handelt, liegt daran, dass sich im Sichtfeld des Fahrers des Personenkraftwagens im Wesentlichen nur das vorausfahrende Fahrzeug befindet, so dass der Fahrer des Personenkraftwagens auf ein Fahrmanöver des Fahrzeuges, insbesondere eine eingeleitete Bremsung, frühzeitig reagieren kann, um einen Auffahrunfall zwischen dem Fahrzeug und dem Personenkraftwagen weitestgehend zu vermeiden.

In einer weiteren Ausführung liegt die höchste Kritikalität in Bezug auf die erfasste, dem Fahrzeug rückwärtige Situation vor,
- wenn ermittelt wird, dass es sich bei dem nachfolgenden Fahrzeug um einen Personenkraftwagen handelt und der Abstand zwischen dem Fahrzeug und dem als Personenkraftwagen erfassten nachfolgenden Fahrzeug weniger als 15 Meter beträgt,
- wenn ermittelt wird, dass es sich bei dem nachfolgenden Fahrzeug um ein Motorrad handelt und der Abstand zwischen dem Fahrzeug und dem als Motorrad erfassten nachfolgenden Fahrzeug weniger als 30 Meter beträgt und
- wenn ermittelt wird, dass es sich bei dem nachfolgenden Fahrzeug um einen Lastkraftwagen handelt und der Abstand zwischen dem Fahrzeug und dem als Lastkraftwagen erfassten nachfolgenden Fahrzeug weniger als 30 Meter beträgt.

Auch hier ist eine derartige Abstufung in Bezug auf den Abstand des nachfolgenden Fahrzeuges zu dem Fahrzeug so gewählt, da ein Fahrer eines als Personenkraftwagen erfassten nachfolgenden Fahrzeuges frühzeitiger auf eine unerwartet eingeleitete Bremsung des Fahrzeuges reagiert, da sich im Wesentlichen nur dieses im Sichtfeld des Fahrers des Personenkraftwagens befindet, als wenn es sich um ein Motorrad oder ein Lastkraftwagen als nachfolgendes Fahrzeug handelt.

Darüber hinaus sieht eine Ausführung des Verfahrens vor, dass bei einer erfassten, dem Fahrzeug vorausliegenden sich auflösenden Stausituation Klassifikationsschwellen in Bezug auf die mittlere und die höchste Kritikalität um einen vorgegebenen Wert erhöht werden. Insbesondere bei einer solchen sich auflösenden Stausituation verringert sich üblicherweise ein Abstand zwischen hintereinander fahrenden Fahrzeugen, da damit gerechnet wird, dass zeitnah beschleunigt werden kann.

Ausführungsbeispiele der Erfindung werden im Folgenden anhand einer Zeichnung näher erläutert.

Dabei zeigt die:

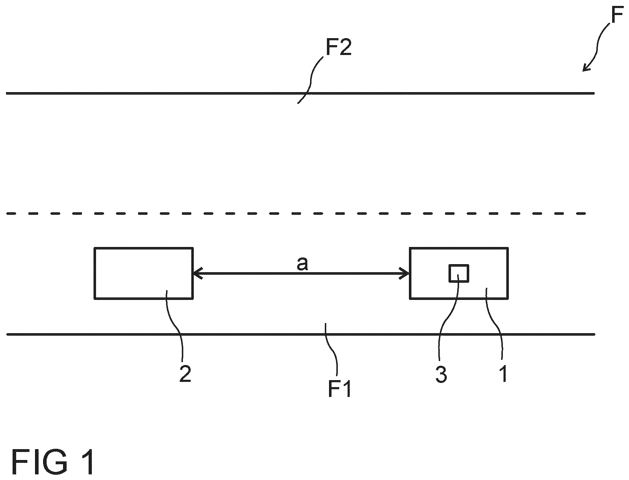

- Fig. 1: schematisch einen Fahrbahnabschnitt mit zwei gegenläufigen Fahrspuren und zwei hintereinander fahrenden Fahrzeugen.

Figur 1 zeigt einen Fahrbahnabschnitt F mit zwei gegenläufigen Fahrspuren F1, F2, wobei auf einer rechten Fahrspur F1 zwei beispielhaft und stark vereinfacht dargestellte Fahrzeuge 1, 2 hintereinander her fahren.

Ein Fahrzeug 1, insbesondere ein Personenkraftwagen, fährt im automatisierten, insbesondere autonomen, Fahrbetrieb, in welchem das Fahrzeug 1 eine Fahraufgabe des Fahrzeuges 1 vollumfänglich ausführt. Dazu weist das Fahrzeug 1 eine Umgebungssensorik 3 mit einer nicht gezeigten Anzahl im und/oder am Fahrzeug 1 angeordneter Erfassungseinheiten auf. Diese Erfassungseinheiten erfassten im Fahrbetrieb des Fahrzeuges 1 fortlaufend Signale, anhand welcher eine Umgebung des Fahrzeuges 1 und sich in dieser befindende Objekte detektiert werden.

Bei der Detektion der Objekte besteht die Gefahr einer Fehlprojektion, so dass beispielsweise ein vorausfahrender Personenkraftwagen als Lastkraftwagen erkannt wird, und das Fahrzeug 1 daraufhin eine Bremsung einleitet, welche nicht erforderlich gewesen wäre. Nachfolgende Fahrzeuge 2 des Fahrzeuges 1 müssten demnach einen so großen Abstand zu dem Fahrzeug 1 einhalten, dass das jeweilige nachfolgende Fahrzeug 2 bei einer fehleingeleiteten Bremsung des Fahrzeuges 1 rechtzeitig bremsen kann, um einen Auffahrunfall zwischen dem nachfolgendem Fahrzeug 2 und dem Fahrzeug 1 zu vermeiden.

Insbesondere ist in Bezug auf das nachfolgende Fahrzeug 2 zu unterscheiden, um welche Fahrzeugklasse es sich bei dem nachfolgenden Fahrzeug 2 handelt, da sich im Wesentlichen nur das vorausfahrende Fahrzeug 1 bei einem Personenkraftwagen als nachfolgendes Fahrzeug 2 im Sichtfeld eines Fahrers des Personenwagens befindet.

Demgegenüber kann ein Fahrer eines Motorrades oder eines Lastkraftwagens als nachfolgendes Fahrzeug 2 aufgrund seiner Sitzhöhe über das Fahrzeug 1 hinwegschauen, so dass ein Augenmerk des Fahrers des Motorrades oder des Lastkraftwagens als nachfolgendes Fahrzeug 2 nicht nur auf das vorausfahrende automatisiert fahrende Fahrzeug 1 gerichtet ist.

Handelt es sich bei dem nachfolgenden Fahrzeug 2 um ein Motorrad oder ein Lastkraftwagen, so wird eine plötzliche Bremsung des Fahrzeuges 1 aufgrund einer Fehlinterpretation einer vorausliegenden Verkehrssituation durch das Fahrzeug 1 von dem Fahrer des Motorrades oder des Lastkraftwagens eher nicht erwartet, so dass die Gefahr eines Auffahrunfalles besteht.

Im Folgenden wird ein Verfahren zum Betrieb des automatisiert fahrenden Fahrzeuges 1 beschrieben, welches das Risiko eines Auffahrunfalles zwischen dem Fahrzeug 1 und einem nachfolgenden Fahrzeug 2 aufgrund einer fehleingeleiteten Bremsung des Fahrzeuges 1 verringert. Das Verfahren stellt ein mehrstufiges Sicherheitskonzept dar.

Anhand der erfassten Signale der Umgebungssensorik 3 wird das dem Fahrzeug 1 nachfolgende Fahrzeug 2 detektiert und ein Abstand a zwischen dem Fahrzeug 1 und dem nachfolgenden Fahrzeug 2 ermittelt.

Zudem wird anhand der erfassten Signale, insbesondere anhand von Bildsignalen einer Kamera der Umgebungssensorik 3 ermittelt, um welche Fahrzeugklasse es sich bei dem nachfolgenden Fahrzeug 2 handelt. Dabei wird zwischen den Fahrzeugklassen Personenkraftwagen, Motorrad und Lastkraftwagen unterschieden.

Anhand der ermittelten Fahrzeugklasse des dem Fahrzeug 1 nachfolgenden Fahrzeuges 2 und des Abstandes a zwischen dem Fahrzeug 1 und dem nachfolgenden Fahrzeug 2 wird eine Kritikalität einer vorliegenden Situation, insbesondere in Bezug darauf, wenn das im automatisierten Fahrbetrieb fahrende Fahrzeug 1 plötzlich bremst, klassifiziert.

Wird ermittelt, dass es sich bei dem nachfolgenden Fahrzeug 2 um einen Personenkraftwagen handelt und zwischen diesem und dem Fahrzeug 1 wird ein Abstand a von mehr als 30 Metern erfasst, dann wird die Kritikalität als geringst klassifiziert.

Handelt es sich bei dem nachfolgenden Fahrzeug 2 um ein Motorrad oder einen Lastkraftwagen und der Abstand a zwischen dem Fahrzeug 1 und dem als Motorrad oder Lastkraftwagen erfassten nachfolgenden Fahrzeug 2 beträgt mehr als 50 Meter, dann wird auch hier die Kritikalität als geringst eingestuft.

Liegt die geringste Kritikalität vor, so ist eine maximale Höchstgeschwindigkeit für das automatisiert fahrenden Fahrzeug 1 von beispielsweise 60 km/h zulässig.

Fährt das als Personenkraftwagen erfasste nachfolgende Fahrzeug 2 mit einem Abstand a von weniger als 30 Metern hinter dem Fahrzeug 1, wird die Kritikalität als mittlere Kritikalität klassifiziert.

Auch wird die vorliegende Situation mit der mittleren Kritikalität klassifiziert, wenn es sich bei dem nachfolgenden Fahrzeug 2 um ein Motorrad oder einen Lastkraftwagen handelt, und der Abstand a zwischen dem Fahrzeug 1 und dem Motorrad oder dem Lastkraftwagen als nachfolgendes Fahrzeug 2 weniger als 50 Meter beträgt. In diesem Fall ist eine maximale Höchstgeschwindigkeit des automatisiert fahrenden Fahrzeuges 1 von 40 km/h zulässig.

Die dem Fahrzeug 1 in Bezug auf einen rückwärtigen Verkehr vorliegende Situation wird mit einer höchsten Kritikalität klassifiziert, wenn es sich bei dem nachfolgenden Fahrzeug 2 um einen Personenkraftwagen handelt und der Abstand a zwischen diesem und dem automatisiert fahrenden Fahrzeug 1 weniger als 15 Meter beträgt.

Handelt es sich bei dem nachfolgenden Fahrzeug 2 um ein Motorrad oder einen Lastkraftwagen und der Abstand a zwischen diesem und dem Fahrzeug 1 beträgt weniger als 30 Meter, dann wird die vorliegende Situation mit der höchsten Kritikalität klassifiziert. Bei Vorliegen der höchsten Kritikalität wird die maximal zulässige Höchstgeschwindigkeit des automatisiert fahrenden Fahrzeuges 1 auf 20 km/h begrenzt.

Wird anhand erfasster Signale der Umgebungssensorik 3 des Fahrzeuges 1 ermittelt, dass sich das Fahrzeug 1 und ein nachfolgendes Fahrzeug 2 im Stau befinden, wobei sich der Stau kurzfristig auflöst und sich die Fahrzeuge 1, 2 nach 200 Metern wieder im Stau befinden, so wird die Kritikalität der vorliegenden Situation, wie oben beschrieben, klassifiziert. Insbesondere wird eine solche Situation anhand radarbasierter Erfassungseinheiten der Umgebungssensorik 3 des Fahrzeuges 1 ermittelt. Löst sich der Stau nur als zeitliche Lücke auf, so verringert sich eine Geschwindigkeit radarbasierter Signale in einiger Entfernung zu dem Fahrzeug 1, wohingegen die Geschwindigkeit radarbasierter Signale im Fall eines Auflösens des Staues in der Entfernung zunimmt.

Wird hingegen erfasst, dass sich der Stau auflöst, verringert sich üblicherweise ein Abstand a zwischen hintereinander fahrenden Fahrzeugen 1, 2, da damit gerechnet wird, dass zeitnah beschleunigt werden kann. Bei einer derartigen Verringerung des Abstandes a wird üblicherweise eine Übernahmeaufforderung an einen Fahrer des Fahrzeuges 1 ausgegeben, so dass dieser die Fahraufgabe in Bezug auf das Fahrzeug 1 übernimmt.

Das Verfahren sieht in einem solchen Fall, insbesondere bei Auflösen eines Staues, jedoch vor, Klassifikationsschwellen hinsichtlich der Klassifizierung der Kritikalität, welche abhängig ist von der Fahrzeugklasse des nachfolgenden Fahrzeuges 2 und dem Abstand a zwischen dem Fahrzeug 1 und dem nachfolgenden Fahrzeug 2, um 20 % zu erhöhen.

Für die mittlere Kritikalität bedeutet das dann, dass diese vorliegt, sofern ein Personenkraftwagen als nachfolgendes Fahrzeug 2 erfasst wird, und der Abstand a weniger als 36 Meter beträgt.

Wird ein Motorrad oder ein Lastkraftwagen als nachfolgendes Fahrzeug 2 bei einem sich auflösenden Stau erfasst, so wird die Kritikalität als mittlere Kritikalität klassifiziert, wenn der Abstand a zwischen dem Fahrzeug 1 und dem Motorrad oder dem Lastkraftwagen als nachfolgendes Fahrzeug 2 weniger als 60 Meter beträgt.

Mittels des oben beschriebenen Verfahrens kann das Risiko eines eintretenden Auffahrunfalles für das automatisiert fahrende Fahrzeug 1, insbesondere wegen einer Fehlinterpretation eines vor dem Fahrzeug 1 detektierten Objektes, erheblich verringert werden.

## Patentansprüche

1. Verfahren zum Betrieb eines automatisiert fahrenden Fahrzeuges (1), wobei anhand erfasster Signale einer Umgebungssensorik (3) eine Umgebung des Fahrzeuges (1) und sich in dieser befindende Objekte detektiert werden,
wobei eine Kritikalität einer anhand der Signale erfassten, dem Fahrzeug (1) rückwärtig vorliegenden Situation in Abhängigkeit einer ermittelten Fahrzeugklasse eines dem Fahrzeug (1) nachfolgenden Fahrzeuges (2) und eines erfassten Abstandes (a) zwischen dem Fahrzeug (1) und dem nachfolgenden Fahrzeug (2) klassifiziert wird,
**dadurch gekennzeichnet, dass** eine für den automatisierten Fahrbetrieb zulässige Höchstgeschwindigkeit des Fahrzeuges (1) in Abhängigkeit der klassifizierten Kritikalität bestimmt wird, dass zwischen einer geringsten Kritikalität, einer mittleren Kritikalität und einer höchsten Kritikalität unterschieden wird und dass die Bestimmung der zulässigen Höchstgeschwindigkeit derart erfolgt, dass die zulässige Höchstgeschwindigkeit bei klassifizierter geringster Kritikalität einem vorgegebenen Maximalwert entspricht und mit klassifizierter zunehmender Kritikalität verringert wird.

2. Verfahren nach Anspruch 1,
**dadurch gekennzeichnet, dass** die geringste Kritikalität in Bezug auf die erfasste rückwärtige Situation des Fahrzeuges (1) vorliegt,
- wenn ermittelt wird, dass es sich bei dem nachfolgenden Fahrzeug (2) um einen Personenkraftwagen handelt und der Abstand (a) zwischen dem Fahrzeug (1) und dem als Personenkraftwagen erfassten nachfolgenden Fahrzeug (2) mehr als 30 Meter beträgt,
- wenn ermittelt wird, dass es sich bei dem nachfolgenden Fahrzeug (2) um ein Motorrad handelt und der Abstand (a) zwischen dem Fahrzeug (1) und dem als Motorrad erfassten nachfolgenden Fahrzeug (2) mehr als 50 Meter beträgt, und
- wenn ermittelt wird, dass es sich bei dem nachfolgenden Fahrzeug (2) um einen Lastkraftwagen handelt und der Abstand (a) zwischen dem Fahrzeug (1) und dem als Lastkraftwagen erfassten nachfolgenden Fahrzeug (2) mehr als 50 Meter beträgt.

3. Verfahren nach einem Anspruch 1 oder 2,
**dadurch gekennzeichnet, dass** die höchste Kritikalität in Bezug auf die erfasste rückwärtige Situation des Fahrzeuges (1) vorliegt,
- wenn ermittelt wird, dass es sich bei dem nachfolgenden Fahrzeug (2) um einen Personenkraftwagen handelt und der Abstand (a) zwischen dem Fahrzeug (1) und dem als Personenkraftwagen erfassten nachfolgenden Fahrzeug (2) weniger als 15 Meter beträgt,
- wenn ermittelt wird, dass es sich bei dem nachfolgenden Fahrzeug (2) um ein Motorrad handelt und der Abstand (a) zwischen dem Fahrzeug (1) und dem als Motorrad erfassten nachfolgenden Fahrzeug (2) weniger als 30 Meter beträgt, und
- wenn ermittelt wird, dass es sich bei dem nachfolgenden Fahrzeug (2) um einen Lastkraftwagen handelt und der Abstand (a) zwischen dem Fahrzeug (1) und dem als Lastkraftwagen erfassten nachfolgenden Fahrzeug (2) weniger als 30 Meter beträgt.

4. Verfahren nach einem der Ansprüche 1 bis 3,
**dadurch gekennzeichnet, dass** bei einer erfassten, dem Fahrzeug (1) vorausliegenden sich auflösenden Stausituation Klassifikationsschwellen in Bezug auf die mittlere und die höchste Kritikalität um einen vorgegebenen Wert erhöht werden.

5. Verfahren nach einem der vorhergehenden Ansprüche,
**dadurch gekennzeichnet, dass** in Bezug auf die Fahrzeugklasse des nachfolgenden Fahrzeuges (2) zwischen Personenkraftwagen, Motorrad und Lastkraftwagen unterschieden wird.

## Claims

1. Method for operating an autonomous driving vehicle (1), wherein, on the basis of identified signals from an environmental sensor system (3), the environment of the vehicle (1) and objects located therein are detected,
wherein a criticality of a situation that exists behind the vehicle (1) and is identified by means of the signals is classified according to a determined vehicle class of a vehicle (2) following the vehicle (1) and an identified distance (a) between the vehicle (1) and the following vehicle (2),
**characterized in that** a maximum permissible speed of the vehicle (1) for autonomous driving is determined depending on the classified criticality, **in that** a distinction is made between the lowest criticality, a medium criticality and the highest criticality, **and in that** the maximum permissible speed is determined such that, at the classified lowest criticality, the maximum permissible speed corresponds to a predetermined maximum value and is reduced with classified increasing criticality.

2. Method according to claim 1,
**characterized in that** the lowest criticality in relation to the identified rearward situation of the vehicle (1) exists,
- if it is determined that the following vehicle (2) is a passenger car and the distance (a) between the vehicle (1) and the following vehicle (2) identified as a passenger car is more than 30 meters,
- if it is determined that the following vehicle (2) is a motorcycle and the distance (a) between the vehicle (1) and the following vehicle (2) identified as a motorcycle is more than 50 meters, and
- if it is determined that the following vehicle (2) is a truck and the distance (a) between the vehicle (1) and the following vehicle (2) identified as a truck is more than 50 meters.

3. Method according to claim 1 or claim 2,
**characterized in that** the highest criticality in relation to the identified rearward situation of the vehicle (1) exists,
- if it is determined that the following vehicle (2) is a passenger car and the distance (a) between the vehicle (1) and the following vehicle (2) identified as a passenger car is less than 15 meters,
- if it is determined that the following vehicle (2) is a motorcycle and the distance (a) between the vehicle (1) and the following vehicle (2) identified as a motorcycle is less than 30 meters, and
- if it is determined that the following vehicle (2) is a truck and the distance (a) between the vehicle (1) and the following vehicle (2) identified as a truck is less than 30 meters.

4. Method according to any of claims 1 to 3,
**characterized in that** in the event of an identified, dissipating traffic jam ahead of the vehicle (1), classification thresholds relating to the medium and highest criticality are increased by a predetermined value.

5. Method according to any of the preceding claims,
**characterized in that** in relation to the vehicle class of the following vehicle (2) a distinction is made between passenger cars, motorcycles and trucks.

## Revendications

1. Procédé permettant de faire fonctionner un véhicule (1) se déplaçant de manière automatisée, dans lequel un environnement du véhicule (1) et les objets qui s'y trouvent sont détectés à l'aide de signaux perçus par un système de capteurs environnementaux (3),
dans lequel une criticité d'une situation présente à l'arrière du véhicule (1) et perçue à l'aide des signaux est classée en fonction d'une classe de véhicule déterminée d'un véhicule (2) qui suit le véhicule (1) et d'une distance (a) perçue entre le véhicule (1) et le véhicule qui suit (2),
**caractérisé en ce qu'**une vitesse maximale autorisée du véhicule (1) pour le fonctionnement de conduite automatisé est établie en fonction de la criticité classée, **en ce qu'**une distinction est faite entre une criticité minimale, une criticité moyenne et une criticité maximale, **et en ce que** l'établissement de la vitesse maximale autorisée est effectué de telle sorte que, en cas de criticité classée minimale, la vitesse maximale autorisée correspond à une valeur maximale prédéfinie et diminue à mesure que la criticité classée augmente.

2. Procédé selon la revendication 1,
**caractérisé en ce que** la criticité minimale en ce qui concerne la situation perçue à l'arrière du véhicule (1) est
- s'il est déterminé que le véhicule qui suit (2) est une voiture de tourisme et que la distance (a) entre le véhicule (1) et le véhicule qui suit (2) perçu comme une voiture de tourisme est supérieure à 30 mètres,
- s'il est déterminé que le véhicule qui suit (2) est une moto et que la distance (a) entre le véhicule (1) et le véhicule qui suit (2) perçu comme une moto est supérieure à 50 mètres, et
- s'il est déterminé que le véhicule qui suit (2) est un camion et que la distance (a) entre le véhicule (1) et le véhicule qui suit (2) perçu comme un camion est supérieure à 50 mètres.

3. Procédé selon la revendication 1 ou 2,
**caractérisé en ce que** la criticité maximale en ce qui concerne la situation perçue à l'arrière du véhicule (1) est
- s'il est déterminé que le véhicule qui suit (2) est une voiture de tourisme et que la distance (a) entre le véhicule (1) et le véhicule qui suit (2) perçu comme une voiture de tourisme est inférieure à 15 mètres,
- s'il est déterminé que le véhicule qui suit (2) est une moto et que la distance (a) entre le véhicule (1) et le véhicule qui suit (2) perçu comme une moto est inférieure à 30 mètres, et
- s'il est déterminé que le véhicule qui suit (2) est un camion et que la distance (a) entre le véhicule (1) et le véhicule qui suit (2) perçu comme un camion est inférieure à 30 mètres.

4. Procédé selon l'une des revendications 1 à 3,
**caractérisé en ce que**, en cas de situation d'embouteillage en voie de résorption, située en amont du véhicule (1), perçue, les seuils de classification en ce qui concerne la criticité moyenne et la criticité maximale sont augmentés d'une valeur prédéfinie.

5. Procédé selon l'une des revendications précédentes,
**caractérisé en ce que**, en ce qui concerne la classe de véhicule du véhicule qui suit (2), une distinction est faite entre les voitures particulières, les motos et les camions.
